# EUROPÄISCHE PATENTANMELDUNG

(11) **EP 1 821 042 A2**
(43) Veröffentlichungstag der Anmeldung: **22.08.2007**
(21) Anmeldenummer: 07002835.2
(22) Anmeldetag: 09.02.2007
(51) Int. Cl.: F24F 3/14

(54) **Entfeuchtungsvorrichtung**

(30) Priorität: 20.02.2006 AT 12406 U
(71) Anmelder: Arbeiter, Peter, 6900 Bregenz (AT)
(72) Erfinder: Arbeiter, Peter, 6900 Bregenz (AT)
(74) Vertreter: Hofmann, Ralf U.

(57) **Zusammenfassung**

Eine Entfeuchtungsvorrichtung zur Kälte-Entfeuchtung von Luft umfasst einen Haupt-Wärmetauscher (5) zur Abkühlung der zu entfeuchtenden Luft, der einen ersten Kanal zur Durchführung der zu entfeuchtenden Luft mittels eines Prozessluft-Ventilators (11) und einen zweiten Kanal aufweist, welcher einen Verdampfer für ein Kältemittel bildet, das in einem weiters einen Kondensator (9) aufweisenden Kältemittelkreislauf umläuft. Aus der zu trocknenden Luft im Haupt-Wärmetauscher (5) abgeschiedenes Kondenswasser ist von einem Kondenswasser-Sammelbehälter (12) auffangbar bzw. in diesen eingeleitet. Aus dem Kondenswasser-Sammelbehälter (12) abgeführtes Kondenswasser ist mittels mindestens einer Sprühdüse (15) auf den Kondensator (9) des Kältemittelkreislaufs aufsprühbar.

## Beschreibung

Die Erfindung betrifft eine Entfeuchtungsvorrichtung zur Kälte-Entfeuchtung von Luft mit einem Haupt-Wärmetauscher zur Abkühlung der zu entfeuchtenden Luft, der einen ersten Kanal zur Durchführung der zu entfeuchtenden Luft mittels eines Prozessluft-Ventilators und einen zweiten Kanal aufweist, welcher einen Verdampfer für ein Kältemittel bildet, das in einem weiters einen Kondensator aufweisenden Kältemittelkreislauf umläuft, wobei aus der zu trocknenden Luft im Haupt-Wärmetauscher abgeschiedenes Kondenswasser von einem Kondenswasser-Sammelbehälter auffangbar ist bzw. in diesen eingeleitet ist. Weiters betrifft die Erfindung ein Verfahren zur Kälte-Entfeuchtung von Luft, bei welchem die zu entfeuchtende Luft mittels eines Prozessluft-Ventilators durch einen ersten Kanal eines Haupt-Wärmetauschers geführt wird, durch dessen zweiten Kanal ein Kältemittel geführt wird und in diesem verdampft wird, welches in einem weiters einen Kondensator aufweisenden Kältemittelkreislauf umläuft, wobei aus der zu trocknenden Luft im Haupt-Wärmetauscher abgeschiedenes Kondenswasser in einem Kondenswasser-Sammelbehälter aufgefangen wird bzw. in diesen geleitet wird.

Entfeuchtete bzw. getrocknete Luft wird in verschiedenen Bereichen benötigt, beispielsweise bei wassergekühlten Formwerkzeugen von Spritzguss- oder Blasmaschinen der Kunststoffindustrie in um eine Kondensation von Luftfeuchtigkeit an den gekühlten Werkzeugflächen zu vermeiden.

Entfeuchtungsvorrichtungen der eingangs genannten Art sind bekannt. Hierbei wird die zu entfeuchtende Luft, auch als "Prozessluft" bezeichnet, mittels eines Ventilators durch einen Filter, einen ersten Kanal eines Vor-Wärmetauschers, einen ersten Kanal eines Haupt-Wärmetauschers und weiter durch den zweiten Kanal des Vor-Wärmetauschers geführt, aus welchem sie zu einem Luftaustritt gelangt. Im ersten Kanal des Vor-Wärmetauschers erfolgt eine Vorkühlung der Luft. Im Haupt-Wärmetauscher erfolgt die Kühlung auf den gewünschten Taupunkt. Zu diesem Zweck wird durch den zweiten Kanal des Haupt-Wärmetauschers ein Kältemittel geführt, welches in einem Kältemittelkreislauf umläuft. Der zweite Kanal des Haupt-Wärmetauschers bildet hierbei einen Verdampfer für das Kältemittel und der Kältemittelkreislauf umfasst weiters in herkömmlicher Weise einen Kompressor, einen Kondensator und ein Expansionsventil. Durch die Abkühlung der Luft wird zumindest im Haupt-Wärmetauscher Kondenswasser ausgeschieden, welches gesammelt und durch eine Abfuhrleitung ins Abwassersystem abgeführt wird. Die durch die Abkühlung getrocknete Luft wird im zweiten Kanal des Vor-Wärmetauschers wiederum erwärmt und steht am Luftaustritt für den gewünschten Einsatzzweck zur Verfügung.

Zur Kühlung des Kondensators des Kältemittelkreislaufs werden bei Einrichtungen dieser Art weist Umgebungsluft-Ventilatoren eingesetzt, wobei der von ihnen erzeugte Umgebungsluftstrom über eine Wärmeübertragungsoberfläche des Kondensators strömt. Bei einem neueren Typ einer Entfeuchtungsvorrichtung ist der Kondensator des Kältemittelkreislaufs im Prozessluftstrom angeordnet. Hierbei wird die Prozessluft vor ihrer Durchführung durch den Haupt-Wärmetauscher durch einen wassergekühlten Vor-Wärmetauscher geführt und nach ihrer Durchführung durch den Haupt-Wärmetauscher durch den Kondensator des Kältemittelkreislaufs geleitet.

Es ist weiters bei Kältemittelkreisläufen bekannt geworden, zur Verbesserung der Kühlung des Kondensators Leitungswasser aufzusprühen. Aufgrund der erforderlichen Aufbereitung des Leitungswassers, durch welche Kalk und gegebenenfalls weitere gelöste Stoffe entfernt werden, die für den Kondensator schädlich sind, sind die Investitionskosten hierbei hoch. Zum Schutz des Kondensators können weiters teure Speziallackierungen erforderlich sein.

Aus der WO 87/01436 A1 ist ein nicht gattungsgemäßes Klimagerät zum Kühlen und Aufheizen eines Raums bekannt. Bei Klimageräten findet im Kühlbetrieb automatisch eine Entfeuchtung der zugeführten Luft statt, wobei es sich um einen unerwünschten Nebeneffekt handelt. Die trockene Luft wirkt sich ungünstig auf die Atemwege von sich im klimatisierten Raum befindlichen Personen aus. Nachbefeuchtungen sind daher bereits bekannt geworden. Beim Klimagerät der WO 87/01436 wird aufgefangenes Kondenswasser an verschiedenen Stellen in den Luftstrom eingesprüht. Unter anderem findet auch eine Einsprühung in die aus dem Raum ausgeführte Abluft statt, nachdem diese den Wärmetauscher, durch welchen auch die Zuluft geleitet wird, passiert hat. Hierbei findet auch eine Aufsprühung auf einen Kondensator eines Kältemittelkreislaufs statt, durch dessen Verdampfer die Zuluft nach dem Durchtritt durch den genannten Wärmetauscher geleitet wird. Ein weiteres Klimagerät, bei dem Kondenswasser aufgefangen wird, ist aus der US 4,136,529 A bekannt. Im Kühlmodus wird die von einem Ventilator durch einen Einlass angesaugte Luft in einem Wärmetauscher gekühlt und strömt in der Folge durch einen Auslass aus. Der Wärmetauscher stellt in diesem Modus den Verdampfer eines Kältemittelkreislaufs dar. Im Heizmodus wird die Luft von diesem Wärmetauscher erwärmt, der in diesem Fall den Kondensator des Kältemittelkreislaufs bildet. Hierbei wird aufgefangenes Kondensat auf diesem Kondensator aufgesprüht.

Aufgabe der Erfindung ist es, eine Entfeuchtungsvorrichtung bzw. ein Verfahren der eingangs genannten Art bereitzustellen, durch welche eine Energie- und/oder Kosteneinsparung erreicht werden kann. Erfindungsgemäß gelingt dies durch eine Entfeuchtungsvorrichtung mit den Merkmalen des Anspruchs 1 bzw. durch ein Verfahren mit den Merkmalen des Anspruchs 10.

Wesentlich ist es, dass für das Aufsprühen des Kondenswassers keine teure Wasseraufbereitung oder Speziallackierung des Kondensators erforderlich ist, da Kalk oder andere für den Kondensator schädliche gelöste Stoffe im Kondenswasser nicht enthalten sind.

Durch das Aufsprühen des Kondenswassers auf den Kondensator kann zum einen eine Kosteneinsparung erreicht werden. Beispielsweise kann durch die adiabate Kühlleistung des Kondenswassers bzw. durch die Kühlung des Kondensators durch Verdunstung des aufgesprühten Kondenswassers der Kondensator kleiner ausgebildet werden und/oder Umgebungsluft-Ventilatoren zur Erzeugung eines den Kondensator kühlenden Umgebungsluftstroms können mit geringerer Leistung ausgelegt bzw. betrieben werden, wodurch auch eine Energieeinsparung im Betrieb erreicht werden kann. Weiters kann vorzugsweise das gesamte anfallende Kondenswasser durch Verdunstung aufgebraucht werden, wodurch ein Anschluss der erfindungsgemäßen Entfeuchtungsvorrichtung ans Abwassersystem entfallen kann.

In einer bevorzugten Ausführungsform der Erfindung wird die zu entfeuchtende Luft vor ihrer Durchführung durch den Haupt-Wärmetauscher durch den ersten Kanal eines Vor-Wärmetauschers und nach ihrer Durchführung durch den Haupt-Wärmetauscher durch den zweiten Kanal eines Vor-Wärmetauschers durchgeführt. Dieser Luft-Luft-Wärmetauscher ist vorzugsweise in Form eines Plattenwärmetauschers ausgebildet. Eine Entfeuchtungsvorrichtung gemäß diesem Ausführungsbeispiel der Erfindung benötigt keinen wassergekühlten Vorkühler, so dass die Bereitstellung von Kaltwasser für die Entfeuchtungsvorrichtung entfallen kann. Für eine derartige Entfeuchtungsvorrichtung kann ein Wasseranschluss überhaupt entfallen.

Eine erfindungsgemäße Entfeuchtungsvorrichtung dient zur Bereitstellung von entfeuchteter Luft für Produktionsmaschinen, insbesondere in der Kunststoffindustrie.

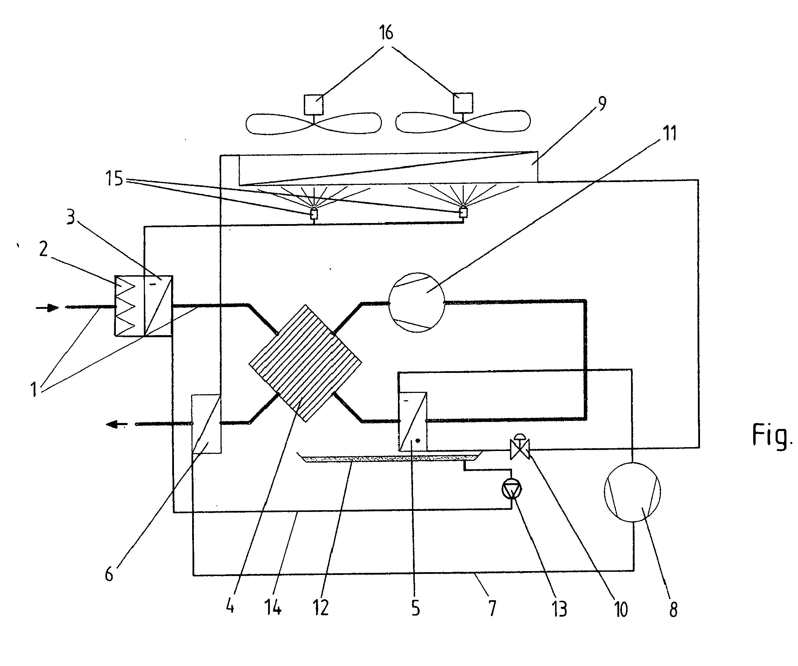

Weitere Vorteile und Einzelheiten der Erfindung werden im Folgenden anhand der beiliegenden Zeichnung erläutert. In dieser zeigt die einzige Figur eine schematische Blockdarstellung eines Ausführungsbeispiels einer erfindungsgemäßen Entfeuchtungsvorrichtung.

Die zu entfeuchtende Luft, auch als "Prozessluft" bezeichnet, wird in der Entfeuchtungsvorrichtung in einer Luftführungsleitung 1 geführt und strömt in diese durch einen Lufteinlass ein. Im gezeigten Ausführungsbeispiel durchströmt die Prozessluft nach ihrem Eintritt in die Luftführungsleitung 1 zunächst einen Luftfilter 2 und dann einen ersten Kanal (Durchlass) eines Zusatz-Wärmetauschers 3, in welchem eine erste Abkühlung der Prozessluft in einer weiter unten genauer erläuterten Weise erfolgt.

In der Folge wird die zu trocknende Luft für ihre weitere Abkühlung durch einen ersten Kanal eines Vor-Wärmetauschers 4 geführt.

Im Weiteren wird die Prozessluft durch den ersten Kanal eines Haupt-Wärmetauschers geführt, in welchem die Abkühlung auf die niedrigste Temperatur der Prozessluft erfolgt.

Im Weiteren wird die Prozessluft durch den zweiten Kanal des Vor-Wärmetauschers 4 geführt. Hierbei nimmt sie, da die ersten und zweiten Kanäle des Vor-Wärmetauschers 4 in einer wärmeübertragenden Verbindung stehen, Wärme der durch den ersten Kanal des Vor-Wärmetauschers 4 strömenden Prozessluft auf und kühlt diese somit ab. Beim Durchsetzen des zweiten Kanals des Vor-Wärmetauschers 4 wird die Prozessluft wiederum erwärmt.

Im weiteren wird die Prozessluft im gezeigten Ausführungsbeispiel durch den ersten Kanal eines Nacherwärmungs-Wärmetauschers 6 geführt, in welchem sie in der weiter unten beschriebenen Weise nochmals nacherwärmt wird.

Die getrocknete Luft verlässt die Luftführungsleitung 1 in der Folge durch einen Luftauslass.

Die Durchführung der zu trocknenden Luft durch die Luftführungsleitung 1 zwischen dem Lufteinlass und dem Luftauslass erfolgt mittels eines Prozessluft-Ventilators 11, der beispielsweise in der Luftführungsleitung 1 zwischen dem Haupt-Wärmetauscher 5 und dem Vor-Wärmetauscher 4 angeordnet ist, aber auch an einer anderen Stelle der Luftführungsleitung 1, auch direkt am Einlass oder Auslass vorgesehen sein könnte.

Die Abkühlung der Prozessluft im Haupt-Wärmetauscher 5 erfolgt dadurch, dass durch den zweiten Kanal des Haupt-Wärmetauschers 5, der mit dem ersten Kanal des Haupt-Wärmetauschers 5 in einer wärmeübertragenden Verbindung steht, ein Kältemittel geführt wird, welches mittels einer Kältemittelführungsleitung 7 in einem Kältemittelkreislauf umläuft. Der zweite Kanal des Haupt-Wärmetauschers 5 bildet hierbei einen Verdampfer für das Kältemittel. Der Kältemittelkreislauf umfasst weiters einen Kältemittelkompressor 8, einen Kondensator 9 und ein Expansionsventil 10, wie dies bei Kältemittelkreisläufen bekannt ist.

Im gezeigten Ausführungsbeispiel wird das Kältemittel auf dem Weg vom Kältemittelkompressor 8 zum Kondensator 9 weiters noch durch den zweiten Kanal des Nacherwärmungs-Wärmetauschers 6 geführt.

Im zweiten Kanal des Haupt-Wärmetauschers 5, der den Verdampfer für das Kältemittel bildet, verdampft das Kältemittel unter Wärmeaufnahme von der durch den ersten Kanal des Haupt-Wärmetauschers 5 geführten Prozessluft. Im Kältemittelkompressor 8 wird das Kältemittel komprimiert, wobei sich seine Temperatur stark erhöht. Im Nacherwärmungs-Wärmetauscher 6, in welchem eine Teilkondensation des Kältemittels stattfinden kann, wird ein Teil der Wärmeenergie des Kältemittels an die Prozessluft übertragen. Im Kondensator 9 erfolgt die Kondensation des Kältemittels, wobei vom Kältemittel Wärme abgeführt wird. Durch das Expansionsventil gelangt das kondensierte Kältemittel wiederum in den Niederdruckbereich des Kältemittelkreislaufs, um im Verdampfer wiederum zu verdampfen.

Durch die Abkühlung der zu entfeuchtenden Luft im Haupt-Wärmetauscher 5 wird Kondenswasser aus der Luft abgeschieden, welches in einem unterhalb des Haupt-Wärmetauschers 5 angeordneten, wannenförmig ausgebildeten Kondenswasser-Sammelbehälter 12 aufgefangen wird.

Je nach dem Grad der Abkühlung der Luft im Vor-Wärmetauscher 4 und ihrem Feuchtigkeitsgehalt kann es auch im Vor-Wärmetauscher 4 zur Bildung von Kondenswasser kommen. Im gezeigten Ausführungsbeispiel erstreckt sich der wannenförmige Kondenswasser-Sammelbehälter 12 auch unter den Vor-Wärmetauscher 4, um in diesem gebildetes Kondenswasser ebenfalls aufzufangen. Es könnten auch separate Auffangwannen vorhanden sein, von denen Ableitungen in einen gemeinsamen Kondenswasser-Sammelbehälter münden.

Beispielsweise wird die Luft im Haupt-Wärmetauscher 5 auf weniger als 5°C, z.B. etwa 3°C abgekühlt. Die Temperatur des Kondenswassers liegt bei der Kondensation im gleichen Temperaturbereich und eine Wärmeisolierung des Kondenswasser-Sammelbehälters 12 kann vorgesehen sein.

Mittels einer Kondenswasser-Pumpe 13 wird Kondenswasser aus dem Kondenswasser-Sammelbehälter 12 durch eine Kondenswasserleitung 14 abgeführt. Dieses Kondenswasser wird im gezeigten Ausführungsbeispiel zunächst durch den zweiten Kanal des Zusatz-Wärmetauschers 3 geführt. Hierbei nimmt das Kondenswasser Wärme von der durch den ersten Kanal des Zusatz-Wärmetauschers 3 geführten Prozessluft auf und erwärmt sich dadurch.

Das dem Kondenswasser-Sammelbehälter 12 entnommene Kondenswasser wird weiters Sprühdüsen 15 zugeführt, die auf den Kondensator 9 gerichtet sind, und mittels dieser Sprühdüsen wird das dem Kondenswasser-Sammelbehälter 12 entnommene Kondenswasser auf den Kondensator 9 aufgesprüht, und zwar auf eine Wärmeübertragungsoberfläche des Kondensators, welche mit dem im Kondensator sich befindenden Kältemittel in einer wärmeübertragenden Verbindung steht. Durch das Aufsprühen des Kondenswassers auf den Kondensator und dessen Verdunstung kommt es somit zu einer Kühlung des Kondensators bzw. einer Wärmeabfuhr aus dem innerhalb des Kondensators sich befindenden Kältemittel.

Auf den Kondensator 9 ist weiters ein Umgebungsluftstrom gerichtet, der mittels mindestens eines Umgebungsluft-Ventilators 16 erzeugt wird. Der Umgebungsluftstrom ist (auch) über die Wärmeübertragungsoberfläche des Kondensators 9 geführt, die mit dem innerhalb des Kondensators befindenden Kühlmittel in wärmeübertragender Verbindung steht und auf die das Kondenswasser aufgesprüht wird. Der Kondensator 9 kann hierbei Durchgangsöffnungen zum Durchtritt der Umgebungsluft aufweisen, wie dies bekannt ist. In der beiliegenden Figur ist schematisch die Aufsprühung des Kondenswassers auf die Seite des Kondensators 9 dargestellt, die der Zufuhrseite für den Umgebungsluftstrom gegenüberliegt. Das Aufsprühen könnte auch auf der gleichen Seite erfolgen, auf der der Umgebungsluftstrom zugeführt wird, wobei vorteilhafterweise ein Einsprühen des Kondenswassers mittels der Sprühdüsen 15 in den zugeführten Umgebungsluftstrom erfolgen kann. Hierbei kann es auch zu einer gewissen Abkühlung des zugeführten Umgebungsluftstroms durch das Einsprühen des Kondenswassers kommen.

Durch den über die Wärmeübertragungsoberfläche des Kondensators 9, auf welche Kondenswasser aufgesprüht wird, streichende Umgebungsluft wird die Verdunstung des Kondenswassers unter Kühlung des Kondensators gefördert. Durch das aufgesprühte Kondenswasser wird die Kühlung des Kondensators 9 im Vergleich zu einer Kühlung nur durch einen von mindestens einem Umgebungsluft-Ventilator 16 hervorgerufenen Umgebungsluftstrom verbessert.

Im gezeigten Ausführungsbeispiel sind zwei Sprühdüsen 15 für das Kondenswasser eingezeichnet. Von diesen kann vorteilhafterweise zumindest eine absperrbar ausgebildet sein, beispielsweise mittels eines in der zu ihr führenden Leitung angeordneten Absperrventils. Je nach erforderlicher Kühlleistung kann die Sperrung oder Freigabe der mindestens einen absperrbaren Sprühdüse erfolgen, vorzugsweise automatisiert mittels einer in der Figur nicht dargestellten Steuerungseinrichtung. Die Menge des aufgesprühten Kondenswassers kann beispielsweise auch durch eine Steuerung der Kondenswasser-Pumpe 13, eines Drosselventils in der Kondenswasserleitung 14 usw. erfolgen.

Im gezeigten Ausführungsbeispiel sind zwei Umgebungsluft-Ventilatoren 16 dargestellt. Der Umgebungsluft-Strom kann durch Steuerung dieser Umgebungsluft-Ventilatoren 16 entsprechend eingestellt werden.

Je mehr Feuchtigkeit in der Prozessluft vorhanden ist, umso mehr Kondenswasser fällt aus und umso mehr Leistung im Kältemittelkreislauf wird benötigt, wodurch auch eine entsprechend starke Kühlung des Kondensators 9 erforderlich ist. Unabhängig von der Feuchtigkeit der zu entfeuchtenden Luft kann jeweils das gesamte ausfallende Kondenswasser zur Kühlung des Kondensators 9 herangezogen werden.

Unterschiedliche Modifikationen des gezeigten Ausführungsbeispiels der Erfindung sind denkbar und möglich, ohne den Bereich der Erfindung zu verlassen. So könnte beispielsweise der Zusatz-Wärmetauscher 3 auch entfallen. Es erfolgt dann keine Vorkühlung der Luft im Zusatz-Wärmetauscher 3, dafür ist das auf den Kondensator 9 aufgesprühte Kondenswasser kälter, d.h. die Kühlung des Kondensators 9 wird verstärkt.

Der Nacherwärmungs-Wärmetauscher 6 könnte auch entfallen. Die ausströmende Luft wird dann weniger stark nacherwärmt.

Grundsätzlich denkbar und möglich wäre es auch, dass der Vor-Wärmetauscher 4 entfällt oder statt dessen ein anderer Wärmetauscher zur Vorkühlung der zu trocknenden Luft eingesetzt wird.

Die Sprühdüsen 15 können mit unter Druck stehendem Kondenswasser und/oder mit zugeführter Druckluft betrieben werden. Insbesondere im letzteren Fall könnte die Kondenswasser-Pumpe 13 auch entfallen und das Kondenswasser der mindestens eine Sprühdüse 15 auch beispielsweise unter Ausnützung der Schwerkraft zugeführt werden.

Es könnte auch nur eine Sprühdüse 15 und/oder ein Umgebungsluft-Ventilator 16 oder mehr als zwei Sprühdüsen 15 und/oder Umgebungsluft-Ventilatoren 16 vorhanden sein.

### Legende zu den Hinweisziffern:

- 1: Luftführungsleitung
- 2: Luftfilter
- 3: Zusatz-Wärmetauscher
- 4: Vor-Wärmetauscher
- 5: Haupt-Wärmetauscher
- 6: Nacherwärmungs-Wärmetauscher
- 7: Kühlmittelführungsleitung
- 8: Kältemittelkompressor
- 9: Kondensator
- 10: Expansionsventil
- 11: Prozessluft-Ventilator
- 12: Kondenswasser-Sammelbehälter
- 13: Kondenswasser-Pumpe
- 14: Kondenswasserleitung
- 15: Sprühdüse
- 16: Umgebungsluft-Ventilator

## Patentansprüche

1. Entfeuchtungsvorrichtung zur Kälte-Entfeuchtung von Luft mit einem Haupt-Wärmetauscher (5) zur Abkühlung der zu entfeuchtenden Luft, der einen ersten Kanal zur Durchführung der zu entfeuchtenden Luft mittels eines Prozessluft-Ventilators (11) und einen zweiten Kanal aufweist, welcher einen Verdampfer für ein Kältemittel bildet, das in einem weiters einen Kondensator (9) aufweisenden Kältemittelkreislauf umläuft, wobei aus der zu trocknenden Luft im Haupt-Wärmetauscher (5) abgeschiedenes Kondenswasser von einem Kondenswasser-Sammelbehälter (12) auffangbar ist bzw. in diesen eingeleitet ist, **dadurch gekennzeichnet, dass** aus dem Kondenswasser-Sammelbehälter (12) abgeführtes Kondenswasser mittels mindestens einer Sprühdüse (15) auf den Kondensator (9) des Kältemittelkreislaufs aufsprühbar ist.

2. Entfeuchtungsvorrichtung nach Anspruch 1, **dadurch gekennzeichnet, dass** mindestens eine Kondenswasser-Pumpe (13) zur Abführung von Kondenswasser aus dem Kondenswasser-Sammelbehälter (12) und zur Zuführung des Kondenswassers zur mindestens einen Sprühdüse (15) vorhanden ist.

3. Entfeuchtungsvorrichtung nach Anspruch 1 oder Anspruch 2, **dadurch gekennzeichnet, dass** zur Vorkühlung der zu entfeuchtenden Luft diese vor ihrer Durchführung durch den Haupt-Wärmetauscher (5) durch einen ersten Kanal eines Vor-Wärmetauschers (4) geführt ist, durch dessen zweiten Kanal die entfeuchtete Luft nach ihrer Durchführung durch den Haupt-Wärmetauscher (5) geführt ist.

4. Entfeuchtungsvorrichtung nach Anspruch 3, **dadurch gekennzeichnet, dass** im Vor-Wärmetauscher (4) abgeschiedenes Kondenswasser ebenfalls im Kondenswasser-Sammelbehälter (12) auffangbar ist.

5. Entfeuchtungsvorrichtung nach Anspruch 3 oder Anspruch 4, **dadurch gekennzeichnet, dass** die zu entfeuchtende Luft vor ihrer Durchführung durch den ersten Kanal des Vor-Wärmetauschers (4) durch einen ersten Kanal eines Zusatz-Wärmetauschers (3) geführt ist, durch dessen zweiten Kanal das aus dem Kondenswasser-Sammelbehälter (12) abgeführte Kondenswasser vor der Aufsprühung auf den Kondensator (9) geführt ist.

6. Entfeuchtungsvorrichtung nach einem der Ansprüche 3 bis 5, **dadurch gekennzeichnet, dass** die entfeuchtete Luft nach ihrer Durchführung durch den zweiten Kanal des Vor-Wärmetauschers (4) durch einen ersten Kanal eines Nacherwärmungs-Wärmetauschers (6) geführt ist, durch dessen zweiten Kanal das Kältemittel vor seiner Durchführung durch den Kondensator (9) geführt ist.

7. Entfeuchtungsvorrichtung nach einem der Ansprüche 1 bis 6, **dadurch gekennzeichnet, dass** mindestens zwei Sprühdüsen (15) zum Aufsprühen auf den Kondensator (9) vorhanden sind, wobei die Durchführung von Kondenswasser durch mindestens eine der Sprühdüsen (15) absperrbar ist.

8. Entfeuchtungsvorrichtung nach einem der Ansprüche 1 bis 7, **dadurch gekennzeichnet, dass** mittels mindestens eines Umgebungsluft-Ventilators (16) ein Umgebungsluftstrom zur Kühlung des Kondensators (9) ausbildbar ist.

9. Entfeuchtungsvorrichtung nach Anspruch 8, **dadurch gekennzeichnet, dass** der Umgebungsluftstrom über eine Wärmeübertragungsoberfläche des Kondensators (9) geführt ist, auf welche das Kondenswasser mittels der mindestens einen Sprühdüse (15) aufgesprüht wird.

10. Verfahren zur Kälte-Entfeuchtung von Luft, bei welchem die zu entfeuchtende Luft mittels eines Prozessluft-Ventilators (11) durch einen ersten Kanal eines Haupt-Wärmetauschers (5) geführt wird, durch dessen zweiten Kanal ein Kältemittel geführt wird und in diesem verdampft wird, das in einem weiters einen Kondensator (9) aufweisenden Kältemittelkreislauf umläuft, wobei aus der zu trocknenden Luft im Haupt-Wärmetauscher (5) abgeschiedenes Kondenswasser in einem Kondenswasser-Sammelbehälter (12) aufgefangen wird bzw. in diesen geleitet wird, **dadurch gekennzeichnet, dass** Kondenswasser aus dem Kondenswasser-Sammelbehälter (12) entnommen wird und mittels mindestens einer Sprühdüse (15) auf den Kondensator (9) des Kältemittelkreislaufs aufgesprüht wird.

11. Verfahren nach Anspruch 10, **dadurch gekennzeichnet, dass** mittels mindestens eines Umgebungsluft-Ventilators (16) ein auf den Kondensator (9) gerichteter Umgebungsluftstrom ausgebildet wird.

12. Verfahren nach Anspruch 11, **dadurch gekennzeichnet, dass** der Umgebungsluftstrom über eine Wärmeübertragungsoberfläche des Kondensators (9) geführt wird, auf welche das Kondenswasser aufgesprüht wird.

13. Verfahren nach Anspruch 11 oder Anspruch 12, **dadurch gekennzeichnet, dass** das Kondenswasser in den auf den Kondensator (9) gerichteten Umgebungsluftstrom eingesprüht wird.

14. Verfahren nach einem der Ansprüche 10 bis 13, **dadurch gekennzeichnet, dass** auch weiteres anfallendes Kondenswasser im Kondenswasser-Sammelbehälter (12) aufgefangen wird bzw. in diesen geleitet wird.

15. Verfahren nach einem der Ansprüche 10 bis 14, **dadurch gekennzeichnet, dass** alles bei der Entfeuchtung der Luft anfallende Kondenswasser auf den Kondensator (9) aufgesprüht wird.
